# EUROPEAN PATENT SPECIFICATION

(11) **EP 3 678 897 B1**
(45) Date of publication and mention of the grant of the patent: **16.06.2021**
(21) Application number: 19706253.2
(22) Date of filing: 11.02.2019
(51) Int. Cl.: B60N 2/68, B29C 65/48, B29C 65/00, B29L 31/30, B29L 31/00, B32B 5/02

(54) **SUPPORT STRUCTURE FOR A SEAT BACK OF A VEHICLE SEAT OF A MOTOR VEHICLE AND METHOD OF MANUFACTURING THE SAME**
TRAGSTRUKTUR FÜR EINE RÜCKENLEHNE EINES FAHRZEUGSITZES EINES KRAFTFAHRZEUGES UND VERFAHREN ZU DEREN HERSTELLUNG
STRUCTURE DE SUPPORT POUR UN DOSSIER DE SIÈGE D'UN SIÈGE DE VÉHICULE D'UN VÉHICULE À MOTEUR ET SON PROCÉDÉ DE FABRICATION

(30) Priority: 13.11.2018 DE 102018128353
(43) Date of publication of application: 15.07.2020
(73) Proprietor: Johann Borgers GmbH, 46397 Bocholt (DE)
(72) Inventor: MENKE, Klaus, 46397 Bocholt (DE); SIEBEN, Holger, 46397 Bocholt (DE)
(74) Representative: Viering, Jentschura & Partner mbB Patent- und Rechtsanwälte
(86) International application number: PCT/EP2019/053220
(87) International publication number: WO 2020/098975

(56) References cited:
- WO-A1-2017/194687
- DE-A1-102009 059 975
- KR-A- 20120 069 165
- KR-B1- 101 886 294
- US-A1- 2017 197 533

## Description

The invention is directed to a support structure for a seat back of a vehicle seat or of a back seat of a motor vehicle, comprising a frame-shaped metal support structure and a plane nonwoven fiber fleece structure, wherein the frame-shaped metal support structure is composed at least substantially of metal slats or metal profiles and comprises at least one thermoplastically bound, plane, nonwoven fiber fleece formed component disposed on one side of the frame-shaped metal support structure and spanning the metal support structure on this side, which is composed of structure-forming fibers, in particular glass fibers, and a matrix-forming binding agent, in particular polyurethane (PU), or thermoplastically deformable fibers, preferably polypropylene fibers, and forms the plane nonwoven fiber fleece support structure or is part of the plane nonwoven fiber fleece support structure.

Similarly, the invention is directed to a method of manufacturing a support structure for a seat back of a vehicle seat or of a back seat of a motor vehicle, comprising a frame-shaped metal support structure and a plane nonwoven fiber fleece support structure, wherein the frame-shaped metal support structure is composed at least substantially of metal slats or metal profiles and comprises at least one thermoplastically bound, plane nonwoven fiber fleece formed component disposed on one side of the frame-shaped metal support structure and spanning the metal support structure on this side, which is composed of structure-forming fibers, in particular glass fibers, and a matrix-forming binding agent, in particular polyurethane (PU), or thermoplastically deformable fibers, preferably polypropylene fibers, and forms the plane nonwoven fiber fleece support structure or is part of the plane nonwoven fiber fleece support structure.

The substantial element imparting the necessary stability to the seat back of a vehicle seat of a motor vehicle forms the support structure thereof. In particular in seat backs of a vehicle seat positioned at the rear of a vehicle, especially in the second or in the last seat row of a motor vehicle or a back seat, this support structure in practice frequently consists of a metal structure made of various metal slats or metal profiles in a rectangular or frame shape and having a metal sheet connecting the metal slats or metal profiles and frequently formed between these. This metal sheet is surfaced with a nonwoven fiber fleece or a carpet pile toward the vehicle rear where the loading area or the trunk are typically located. This frame structure needs to have such a rigidity and strength that the seat back of a vehicle seat provided with a support structure of this type fulfils the requirements and the test procedure according to the DIN ISO standard 27955:2012 in a vehicle crash test.

Given that this metal support structure is composed of metal, in particular steel elements, i.e. steel slats or steel profiles and at least one steel sheet, the support structure has a relatively high weight. In addition, the production of a support structure of this type is associated with a relatively high manufacturing effort, given that first the frame-shaped steel structure needs to be welded, a sheet needs to be molded and punched, and then the sheet needs to be welded onto the steel structure, before then either a plane carpet part supplied with adhesive is adhered to the entire surface of the sheet or a carpet element is formed and is connected to the sheet by an adhesive strip or by means of clipping.

Therefore, alternative support structures have become known as well, which have been developed in the light of reducing the weight of the entire component, i.e. the support structure, and which may be manufactured easily.

In this respect, a support structure of a seat back of a vehicle is known from DE 10 2016 217 952 A1, which is composed of a frame-shaped metal structure and a synthetic material structure arranged in the area surrounded by the frame-shaped metal structure, wherein the synthetic material support structure with its substantially spider web and honeycombed synthetic material body is formed and disposed in the frame inner region spanned by the metal frame, and support structure elements of the metal construction are extrusion-coated with synthetic material portions of the synthetic material support structure. In this support structure, the synthetic material construction and the synthetic material support structure, respectively, is manufactured as a single-piece injection-molded component which is made of a thermoplastic material which is in particular fiber-reinforced. Advantageously, the necessary rigidity and strength of the support structure are substantially achieved by the specific rigidity of the synthetic material structure in this embodiment. However, it is a drawback of this support structure that a relatively massive synthetic material formed component has to be manufactured and connected to the metal support structure which also still has a relatively high weight - also as compared to a sheet which has typically been used before. Given that this synthetic material construction is, in addition, to be configured in a reticular and honeycombed way, a quite complicated and complex injection mold is required in this case.

In another development according to the disclosure of DE 10 2010 005 456 A1, the fabrication of so-called organic sheets or hybrid yarn fabrics or hybrid fiber woven fabrics has been proposed, as well as their arrangement in sandwich components as surface layers on a honeycomb core formed by a plurality of paper ridges. A support structure of this type, no longer comprising a metal support structure, may, however, fulfil the rigidity and strength requirements to be fulfilled in crash tests only if it is configured to be very thick or if it is manufactured using particularly expensive and high-strength reinforcement and binding fibers. For reasons of cost, the search for a solution which provides a support structure having a reduced weight as compared to a pure metal or steel support structure but nevertheless being able to be produced within acceptable cost limits is still going on.

An automotive component formed by a honeycombed core layer of paper or cardboard having cover layers of a thermoplastic fiber material disposed on both sides thereof is, in addition, known from AT 519010 B1.

In addition, a composite component also consisting of a paper honeycomb or flexible polyurethane foam core layer and glass fiber layers applied to both sides thereof, into which a metal wire reinforcing element formed in a profiled way is embedded, is known from DE 10 2007 007 554 A1. This composite component is intended to be used in particular as a sliding headliner, rear shelf or load surface.

WO 2017/194687 A1 and DE 10 2009 059975 A1 disclose other examples of support structures from the prior art.

The object underlying the invention is to create a solution which provides a support structure of a seat back of a vehicle seat of a motor vehicle characterized by a favorable weight and a manufacturing effort favorable in respect of the materials to be used and their processing effort, which has a sufficient crash test strength and crash test rigidity.

In a support structure of the initially mentioned type, this problem is, according to the invention, solved by the at least one thermoplastically bound, plane nonwoven fiber fleece formed component being a thermally compression-molded plane nonwoven fiber fleece formed component which forms the nonwoven fiber fleece support structure or a part of the nonwoven fiber fleece support structure and being joined by material bonded engagement, in particular glued together with, to respectively one outer side or outer surface of each of the metal slats or metal profiles which span the frame-shaped metal support structure, in a way spanning the metal support structure, wherein the nonwoven fiber fleece formed component and/or the nonwoven fiber fleece support structure comprising the nonwoven fiber fleece formed component have/has a rigidity of 6 N/mm to 8 N/mm, expressed as a thickness-related elastic modulus.

Similarly, in a method according to the initially specified type, the aforementioned problem is solved by the frame-shaped metal support structure being provided and placed, and by a nonwoven fiber fleece, in particular a nonwoven glass fiber fleece, being provided and thermally compression-molded to the at least one, plane nonwoven fiber fleece formed component, wherein the nonwoven fiber fleece is compression-molded to the nonwoven fiber fleece formed component forming the plane nonwoven fiber fleece support structure or to a nonwoven fiber fleece formed component forming a part of the plane nonwoven fiber fleece support structure in such a way that the respective plane nonwoven fiber fleece support structure has a rigidity of 6 N/mm to 8 N/mm expressed as a thickness-related elastic modulus, and that the respective at least one plane nonwoven fiber fleece formed component obtained in such a way and forming the nonwoven fiber fleece support structure or forming a part of the nonwoven fiber fleece support structure is joined by material bonded engagement, in particular glued together with, to respectively one outer side or outer surface of each of the metal slats or metal profiles which span the provided fame-shaped metal support structure, in a way spanning the placed metal support structure.

Accordingly, the support structure according to the invention stands out by its configuration as a hybrid support structure which, on the one hand, comprises a frame-shaped metal support structure which is substantially formed as a frame formed by metal slats or metal profiles, and in which on one side of the frame a nonwoven fiber fleece support structure formed by a nonwoven fiber fleece formed component or comprising a nonwoven fiber fleece formed component is adhered by material bonded engagement and in a way spanning the metal structure to an outer side or outer surface of the metal support structure formed by the metal slats or metal profiles, and thus to the frame. In this respect, the plane nonwoven fiber fleece formed component forming at least a part of the nonwoven fiber fleece support structure in particular has a rigidity of 6 N/m to 8 N/mm expressed as a thickness-related elastic modulus when forming the nonwoven fiber fleece support structure. In a sandwich structure only comprising the at least one nonwoven fiber fleece formed component, the nonwoven fiber fleece support structure has - just like in the case in which it is already formed by the nonwoven fiber fleece formed component - altogether a rigidity of 6 N/mm to 8 N/mm expressed as a thickness-related elastic modulus. A nonwoven fiber fleece support structure of this type has, together with the frame-shaped metal support structure to which it is joined by material bonded engagement, the necessary crash test strength and crash test rigidity that a support structure of a seat back of a motor vehicle seat or a rear seat of a motor vehicle should have.

A support structure according to the invention of this type is, on the one hand, characterized by a relatively low weight, given that the metal support structure needs to be formed only by a frame composed of metal slats or metal profiles and in that, instead of a metal sheet stabilizing this frame, now a plane nonwoven fiber fleece formed component or a plane nonwoven fiber fleece support structure is fixed, in particular adhered, in a way spanning the spanned frame surface, to the frame or to a plane-spanning common surface side of the metal slats or metal profiles forming and spanning this frame. In addition, the manufacturing effort for manufacturing a support structure of this type is reduced as well, given that only the metal slats or metal profiles have to be welded to the metal frame, i.e. to the frame-shaped metal support structure, and a nonwoven fiber fleece formed component or the nonwoven fiber fleece support structure has to be manufactured in the context of a typical thermal molding process from a nonwoven fiber fleece or a nonwoven glass fiber fleece - as the case may be in combination with a honeycombed paper structure. Another manufacturing step then consists of joining together the metal support structure and the nonwoven fiber fleece support structure by material bonded engagement. The processing effort and the materials to be used require a favorable production effort comprising only a few production steps or are characterized by a favorable production effort only requiring a few production steps, wherein the obtained support structure nevertheless meets the necessary crash test conditions with respect to its necessary strength and rigidity. To put it simply, the invention provides a nonwoven fiber fleece support structure which replaces the metal sheet, in particular the steel sheet, hitherto common in practice in metal support structures, arranged within the frame-shaped metal support structure or spanning the same, and wherein the necessary crash test requirements are nevertheless fulfilled by the support structure.

The nonwoven fiber fleece formed component and thus the nonwoven fiber fleece support structure is formed by means of a common compression molding process preferably as a plane nonwoven fiber fleece formed component thermally compression-molded from a nonwoven glass fiber fleece composed of structure-forming glass fibers and having a specific weight of 350 g/m² to 500 g/m² and charged with a polyurethane amount of 350 g/m² to 500 g/m² as a binding agent. Alternatively, the nonwoven fiber fleece formed component and thus the nonwoven fiber fleece support structure may in particular also be configured as a plane nonwoven fiber fleece formed component thermally compression-molded from a nonwoven fiber fleece composed of a mixture of structure-forming glass fibers and thermally deformable, matrix-forming polypropylene fibers as a binding agent and having a specific weight of 900 g/m² to 1200 g/m². Therefore, according to an embodiment of the invention, the at least one thermoplastically bound, plane nonwoven fiber fleece formed component either is a plane nonwoven fiber fleece formed component thermally compression-molded from a nonwoven glass fiber fleece composed of structure-forming glass fibers and having a specific weight of 350 g/m² to 500 g/m² and charged with a polyurethane amount of 350 g/m² to 500 g/m² as a binding agent, or a plane nonwoven fiber fleece formed component thermally compression-molded from a nonwoven fiber fleece composed of a mixture of structure-forming glass fibers and thermally deformable, matrix-forming polypropylene fibers (PP) as a binding agent and having a specific weight of 900 g/m² to 1200 g/m².

According to an advantageous embodiment of the invention, a reinforced nonwoven fiber fleece support structure may be configured by the at least one plane nonwoven fiber fleece formed component being fixed by material bonded engagement to a first outer side of a honeycombed paper structure for forming a reinforced nonwoven fiber fleece support structure, wherein the honeycombed paper structure has a specific paper weight of 140 g/m² to 160 g/m² and the honeycombs of which have a cell width of between 6 mm and 8 mm.

In order to be able to join a plane nonwoven fiber fleece formed component to the honeycombed paper structure, a connection by means of a polyolefin film is advantageous. The invention is therefore further characterized in that the at least one plane nonwoven fiber fleece formed component is joined by material bonded engagement to the honeycombed paper structure by means of a polyolefin film having a specific weight of 60 g/m² to 100 g/m² and laid and thermoplastically deformed between the first outer side of the honeycombed paper structure and a lower side of the at least one plane nonwoven fiber fleece formed component to be joined by material bonded engagement to the honeycombed paper structure.

The nonwoven fiber fleece support structure may also comprise another, second plane nonwoven fiber fleece formed component which is also attached to the honeycombed paper structure by material bonded engagement. According to another embodiment, the invention is therefore characterized in that, for forming a further reinforced nonwoven fiber fleece support structure, a thermoplastically bound, second plane nonwoven fiber fleece formed component is fixed by material bonded engagement to a second outer side of the honeycombed paper structure opposed to the first outer side of the honeycombed paper structure, in particular connected to the honeycombed paper structure by material bonded engagement by means of another polyolefin film which has a specific weight of 60 g/m² to 100 g/m² and which is laid and thermoplastically deformed between the second outer side of the honeycombed paper structure and a lower side of the second plane nonwoven fiber fleece formed component to be connected to the honeycombed paper structure by material bonded engagement.

The second plane nonwoven fiber fleece formed component may be configured like the at least one, first plane nonwoven fiber fleece formed component, so that according to an embodiment of the invention, the second plane nonwoven fiber fleece formed component is either a plane nonwoven fiber fleece formed component thermally compression-molded from a nonwoven glass fiber fleece composed of structure-forming glass fibers and having a specific weight of 350 g/m² to 500 g/m² and being charged with a polyurethane amount of 350 g/m² to 500 g/m² as a binding agent, or is a plane nonwoven fiber fleece formed component thermally compression-molded from a nonwoven fiber fleece composed of a mixture of structure-forming glass fibers and thermally deformable, matrix-forming polypropylene fibers (PP) as a binding agent and having a specific weight of 900 g/m² to 1200 g/m².

The rigidity of the support structure is also substantially determined and influenced by the rigidity of the nonwoven fiber fleece formed component and the rigidity of the respective nonwoven fiber fleece support structure, respectively. According to an embodiment, the invention is therefore characterized in that the nonwoven fiber fleece formed component has a rigidity of 6 N/mm to 8 N/mm expressed as a thickness-related elastic modulus when forming the plane nonwoven fiber fleece support structure, or in that the at least one nonwoven fiber fleece formed component and/or the second nonwoven fiber fleece formed component have/has a rigidity of 6 N/mm to 8 N/mm expressed as a thickness-related elastic modulus when they are part of the plane nonwoven fiber fleece support structure, or that a sandwich construction comprising the at least one nonwoven fiber fleece formed component and the second nonwoven fiber fleece formed component and the honeycombed paper structure has a rigidity of 6 N/mm to 8 N/mm expressed as a thickness-related elastic modulus when being part of the nonwoven fiber fleece support structure or forming the same.

An appropriate fiber mixture for producing the at least one or second nonwoven fiber fleece formed component may also comprise polyethylene terephthalate fibers and polypropylene fibers. It is therefore, in addition, advantageous if the at least one and/or the second nonwoven fiber fleece formed component is a nonwoven fiber fleece formed component thermally compression-molded from the, in particular laid, nonwoven glass fiber fleece with an additionally pinned layer of a polyethylene terephthalate (PET) / polypropylene (PP) fiber mixture having a specific weight of 150 g/m² to 250 g/m², preferably 180 g/m² to 220 g/m², or a nonwoven fiber fleece formed component thermally compression-molded from the fiber mixture comprising in particular laid glass fibers and polypropylene fibers with an additionally pinned layer of a polyethylene terephthalate (PET) / polypropylene (PP) fiber mixture having a specific weight of 150 g/m² to 250 g/m², preferably 180 g/m² to 220 g/m², which is also provided for by the invention. Here, it then is in particular advantageous if the surface of the at least one and/or the second nonwoven fiber fleece formed component opposed to the pinned layer is respectively connected to the honeycombed paper structure by material bonded engagement.

It has further turned out that it is sufficient for obtaining the necessary rigidity of the support structure according to the invention that the at least one plane nonwoven fiber fleece formed component should form a nonwoven fiber fleece support structure compression-molded to a thickness of 5 mm to 10 mm, in particular 6 mm to 9 mm or that the sandwich construction formed by the honeycombed paper structure and the at least one plane nonwoven fiber fleece formed component and/or the second plane nonwoven fiber fleece formed component should form a nonwoven fiber fleece support structure compression-molded to a thickness of 5 mm to 10 mm, in particular 6 mm to 9 mm, by which the invention is characterized as well.

In the usual manner, one side of the nonwoven fiber fleece support structure, typically the surface of the plane nonwoven fiber fleece support structure oriented toward the rear side of the motor vehicle, may be provided with a decoration or a carpet pile, which in particular results in another improvement extending beyond the acoustic behavior of the vehicle trunk with respect to the vehicle interior, already improved by the nonwoven fiber fleece support structure configured according to the invention. Therefore, according to the invention, the at least one or the second nonwoven fiber fleece formed component is laminated with a decoration or a carpet pile on its side facing away from the metal support structure.

In order to achieve in particular the required crash test strength and crash test rigidity, the configuration of the connection by material bonded engagement between the metal support structure and the nonwoven fiber fleece support structure is configured in a particularly advantageous manner if the connection by material bonded engagement between the metal support structure and the at least one nonwoven fiber fleece formed component is configured as a polyurethane hot melt adhesive layer cross-linked between the metal support structure and the nonwoven fiber fleece support structure, which is also further provided by the invention.

According to another embodiment of the invention, it is in particular appropriate and advantageous that the support structure consisting of the frame-shaped metal support structure and the nonwoven fiber fleece support structure has rigidity values of the frame-shaped metal support structure and the plane nonwoven fiber fleece support structure matched with each other in such a way, as well as such a strength value of the polyurethane hot melt adhesive bond connecting the frame-shaped metal support structure and the at least one nonwoven fiber fleece formed component of the nonwoven fiber fleece support structure by material bonded engagement, that the support structure provided in such a way, installed in a seat back of a vehicle seat or a back seat of a motor vehicle, resists the crash test loads of the motor vehicle occurring upon application of the DIN ISO standard 27955:2012.

In a particularly advantageous way, the support structure according to the invention may be manufactured by using a method according to any one or more of claims 15 to 31. This method is characterized by only a small number of manufacturing steps, so that manufacturing the support structure requires only a slight, favorable manufacturing effort.

In particular, the nonwoven fiber fleece formed component is made from a nonwoven glass fiber fleece or a nonwoven fiber fleece containing glass fibers, which is why, according to an embodiment of the invention, either a nonwoven glass fiber fleece composed of structure-forming glass fibers having a specific weight of 350 g/m² to 500 g/m² is provided as a nonwoven fiber fleece and charged with a polyurethane amount of 350 g/m² to 500 g/m² as a binding agent and is thermally compression-molded to the at least one plane nonwoven fiber fleece formed component (5) or a nonwoven fiber fleece composed of a mixture of structure-forming glass fibers and thermally deformable, matrix-forming polypropylene fibers (PP) as a binding agent having a specific weight of 900 g/m² to 1200 g/m² is provided as a nonwoven fiber fleece and thermally compression-molded to the at least one plane nonwoven fiber fleece formed component (5).

Like the support structure according to the invention, the method according to the invention is in one embodiment also characterized in that the nonwoven glass fiber fleece or the nonwoven fiber fleece or the at least one plane nonwoven fiber fleece formed component is fixed by material bonded engagement to a first outer side of a honeycombed paper structure prior to the connection by material bonded engagement, in particular adhesion, of the at least one plane nonwoven fiber fleece formed component to the frame-shaped metal support structure for forming a reinforced nonwoven fiber fleece support structure, wherein the honeycombed paper structure has a specific paper weight of 140 g/m² to 160 g/m² and the honeycombs of which have a cell width of between 6 mm and 8 mm.

Here, the nonwoven glass fiber fleece or the nonwoven fiber fleece or the at least one plane nonwoven fiber fleece formed component may be connected to the honeycombed paper structure by material bonded engagement, which is also provided for by the invention, by means of a polyolefin film which has a specific weight of 60 g/m² to 100 g/m² and which is laid and heated between the first outer side of the honeycombed paper structure and a lower side of the nonwoven glass fiber fleece or of the nonwoven fiber fleece or of the at least one plane nonwoven fiber fleece formed component to be connected to the honeycombed paper structure by material bonded engagement and which is then thermoplastically deformed by pressing together the honeycombed paper structure and the nonwoven glass fiber fleece or the nonwoven fiber fleece or the plane nonwoven fiber fleece formed component.

Advantageously, for forming a further reinforced nonwoven fiber fleece support structure, another, second plane nonwoven fiber fleece formed component is connected to the honeycombed paper structure prior to the adhesion of the at least one plane nonwoven fiber fleece formed component. For this purpose, according to a further embodiment of the invention, a second nonwoven glass fiber fleece or a second nonwoven fiber fleece or a thermoplastically bound, second plane nonwoven fiber fleece formed component is fixed by material bonded engagement to a second outer side of the honeycombed paper structure opposed to the first outer side of the honeycombed paper structure prior to the connection by material bonded engagement, in particular adhesion of the at least one plane nonwoven fiber fleece formed component to the metal support structure for forming a further reinforced nonwoven fiber fleece support structure.

The second plane nonwoven fiber fleece formed component may also be connected by material bonded engagement to the honeycombed paper structure by means of a polyolefin film, for which purpose, according to the invention, the second nonwoven glass fiber fleece or the second nonwoven fiber fleece or the second plane nonwoven fiber fleece formed component is connected by material bonded engagement to the honeycombed paper structure by means of another polyolefin film which has a specific weight of 60 g/m² to 100 g/m² and which is laid and heated between the second outer side of the honeycombed paper structure and a lower side of the second nonwoven glass fiber fleece or the second nonwoven fiber fleece or the second plane nonwoven fiber fleece formed component to be connected by material bonded engagement to the honeycombed paper structure, and which is then thermoplastically deformed by pressing together the honeycombed paper structure and the second plane nonwoven fiber fleece formed component.

For manufacturing the nonwoven glass fiber fleece fiber fleece formed component or the sandwich construction, nonwoven glass fiber fleeces or nonwoven fiber fleeces may be used which are configured to be identical to those used in the manufacturing of the at least one, first nonwoven fiber fleece formed component. Therefore, according to a further embodiment of the invention, a nonwoven glass fiber fleece is provided for attachment to or connection to the honeycombed paper structure as a second nonwoven glass fiber fleece as well, which is also composed of structure-forming glass fibers and has a specific weight of 350 g/m² to 500 g/m² and is charged with a polyurethane amount of 350 g/m² to 500 g/m² as a binding agent, or a nonwoven fiber fleece is provided for attachment to or connection to the honeycombed paper structure as a second nonwoven fiber fleece, which is composed of a mixture of structure-forming glass fibers and thermally deformable, matrix-forming polypropylene (PP) fibers as a binding agent and has a specific weight of 900 g/m² to 1200 g/m².

The second plane nonwoven fiber fleece formed component may be configured just like the at least one, first plane nonwoven fiber fleece formed component, so that the invention is, in addition, characterized in that either a nonwoven glass fiber fleece composed of structure-forming glass fibers and having a specific weight of 350 g/m² to 500 g/m² and being charged with a polyurethane amount of 350 g/m² to 500 g/m² as a binding agent is thermally compression-molded to the second plane nonwoven fiber fleece formed component, or a nonwoven fiber fleece composed of a mixture of structure-forming glass fibers and thermally deformable, matrix-forming polypropylene (PP) fibers as a binding agent and having a specific weight of 900 g/m² to 1200 g/m² is thermally compression-molded to the second plane nonwoven fiber fleece formed component, and that the respective second nonwoven fiber fleece formed component is provided for attachment or connection to the honeycombed paper structure.

Advantageously, the second plane nonwoven fiber fleece formed component is compression-molded in a way to have a rigidity of 6 N/mm to 8 N/mm expressed as a thickness-related elastic modulus.

Preferably, the connections by material bonded engagement of the nonwoven glass fiber fleece or the nonwoven fiber fleece or the at least one and the second plane nonwoven fiber fleece formed component to the honeycombed paper structure are carried out in a compression mold which is preferably heatable, preferably in one process step, which is also provided according to an embodiment of the invention.

According to an embodiment of the invention, the nonwoven fiber fleece formed structure has a rigidity of 6 N/mm to 8 N/mm expressed as a thickness-related elastic modulus. Here, the nonwoven fiber fleece support structure may be configured and compression-molded in such a way that the at least one nonwoven fiber fleece formed component has a rigidity of 6 N/mm to 8 N/mm expressed as a thickness-related elastic modulus when forming the nonwoven fiber fleece support structure, or alternatively, the at least one nonwoven fiber fleece formed component and/or the second nonwoven fiber fleece formed component may have a rigidity of 6 N/mm to 8 N/mm expressed as a thickness-related elastic modulus when forming part of the plane nonwoven fiber fleece support structure, or, as an alternative, a sandwich construction comprising the at least one nonwoven fiber fleece formed component and the second nonwoven fiber fleece formed component and the honeycombed paper structure may have a rigidity of 6 N/mm to 8 N/mm expressed as a thickness-related elastic modulus when forming part of the nonwoven fiber fleece support structure or forming the same.

The respective nonwoven glass fiber fleece or the respective nonwoven fiber fleece formed component may, in addition, also comprise other fiber components. In this respect, according to an embodiment of the invention, the at least one and/or the second nonwoven fiber fleece formed component may be thermally compression-molded from the, in particular laid, nonwoven glass fiber fleece with an additionally pinned layer of a polyethylene terephthalate (PET) / polypropylene (PP) fiber mixture having a specific weight of 150 g/m² to 250 g/m², preferably 180 g/m² to 220 g/m², or the, in particular laid, fiber mixture comprising glass fibers and polypropylene fibers with an additionally pinned layer of a polyethylene terephthalate (PET) / polypropylene (PP) fiber mixture having a specific weight of 150 g/m² to 250 g/m², preferably 180 g/m² to 220 g/m². Here, the respective nonwoven fiber fleece formed component or the respective nonwoven glass fiber fleece or the respective nonwoven fiber fleece is advantageously positioned in a way that the surface of the respective at least one and/or of the respective second nonwoven fiber fleece formed component or of the respective nonwoven glass fiber fleece or of the respective nonwoven fiber fleece opposed to the pinned layer is respectively connected to the honeycombed paper structure by material bonded engagement, which is also provided for by the invention.

As already illustrated with respect to the support structure, the nonwoven fiber fleece support structure advantageously has a thickness of 5 to 10 mm, in particular 6 to 9 mm. According to a further embodiment of the invention, the at least one plane nonwoven fiber fleece formed component is compression-molded to a nonwoven fiber fleece support structure having a thickness of 5 mm to 10 mm, in particular 6 mm to 9 mm, or the sandwich construction formed by the honeycombed paper structure and the at least one plane nonwoven fiber fleece formed component and/or the second plane nonwoven fiber fleece formed component is compression-molded to a nonwoven fiber fleece support structure having a thickness of 5 mm to 10 mm, in particular 6 mm to 9 mm. The nonwoven fiber fleece support structure or the nonwoven fiber fleece formed component may also be provided with a decoration or carpet pile. Therefore, the compression-molded at least one nonwoven fiber fleece formed component or the compression-molded second nonwoven fiber fleece formed component may, also according to the invention, be laminated with a decoration or carpet pile on its side facing away from the metal support structure.

Given that the connection by material bonded engagement between the metal support structure and the nonwoven fiber fleece support structure has a particularly good strength and thereby causes a particularly good rigidity of the support structure if a polyurethane hot melt adhesive is used, the invention is, in addition, characterized in that the connection by material bonded engagement between the metal support structure and the at least one nonwoven fiber fleece formed component or the nonwoven fiber fleece support structure is established by means of an adhesive bond by application of a polyurethane hot melt adhesive onto the metal support structure and/or the nonwoven fiber fleece support structure, and the cross-linkage thereof.

Eventually, according to an embodiment of the method according to the invention, the support structure consisting of the frame-shaped metal support structure and the nonwoven fiber fleece support structure is produced with rigidity values of the frame-shaped metal support structure and of the nonwoven fiber fleece support structure matched with each other in such a way, and with such a strength value of the polyurethane hot melt adhesive bond connecting by material bonded engagement the frame-shaped metal support structure and the at least one nonwoven fiber fleece formed component of the nonwoven fiber fleece support structure that the support structure provided in such a way and installed in a seat back of a vehicle seat or a rear seat of a motor vehicle resists the crash test loads occurring upon application of the DIN ISO standard 27955:2012.

The preceding paragraphs and the claims illustrate that the at least one plane nonwoven fiber fleece formed component forming the plane nonwoven fiber fleece support structure or forming a part of the plane nonwoven fiber fleece support structure and/or the second nonwoven fiber fleece formed component forming a part of the plane nonwoven fiber fleece support structure and/or the nonwoven fiber fleece support structure is characterized by a rigidity of 6 N/mm to 8 N/mm expressed by a thickness-related elastic modulus. This kind of rigidity results from the fact that calculations in plane components are made using flows instead of stresses. In this respect, a thickness-related elastic modulus is applied, which corresponds to a rigidity and has the unit "N/mm".

Hereinafter, the invention is illustrated in more detail by means of a drawing, in which:
- Figure 1: shows a schematic perspective illustration of a plan view of a support structure according to the invention,
- Figure 2: shows a schematic view of a section through the support structure according to Figure 1, and
- Figure 3: shows an enlarged section of Figure 2.

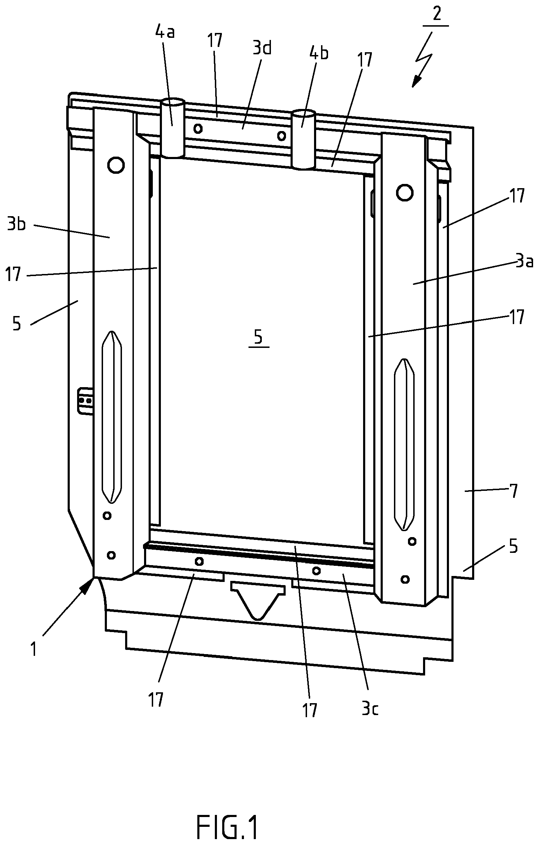

Figure 1 shows in a plan view from the side of the frame-shaped metal support structure 1 a plan view of a support structure according to the invention, altogether denoted by 2. This support structure comprises the frame-shaped metal support structure 1 which is composed of four metal slats or metal profiles 3a, 3b, 3c, 3d as a substantially rectangular frame by welding the individual metal slats or metal profiles 3a to 3d together. In this regard, the metal slats or metal profiles 3a to 3d span the frame-shaped metal support structure 1 and form a free space between each other on the inner frame side. Other than in the exemplary embodiment shown herein, it is, however, also possible to arrange metal elements on the inner frame side in this free space, for example for fixing belt elements. Two sleeves 4a, 4b are welded to the - according to the illustration in Figure 1 - upper metal profile 3d, which serve as attachment of headrests or of a headrest support structure. The position of the support structure 2 shown in Figure 1 also corresponds to the later mounting position thereof in a motor vehicle inasmuch as the side comprising the sleeves 4a, 4b is associated with the upper region of a seat back and the frame-shaped metal support structure 1 faces the front side of a motor vehicle. On the rear side of the frame-shaped metal structure 1 in Figure 1 and therefore in the position of use of the support structure 2 on the side of the support structure 2 facing the rear side of a motor vehicle, a plane nonwoven fiber fleece formed component 5 is applied by material bonded engagement to respectively one outer side or outer surface of each of the metal slats or metal profiles 3a to 3d in a way to span the metal support structure 1, in particular connected to the respective outer side or outer surface of the metal slats or metal profiles 3a to 3d or applied thereto. The individual outer sides or outer surfaces of the metal slats or metal profiles 3a to 3d lie in one plane. This connection by material bonded engagement 6 between the frame-shaped metal support structure 1 and the at least one nonwoven fiber fleece formed component 5 is formed as an adhesive layer 6a which consists of a cross-linked polyurethane hot melt adhesive, thus forming a cross-linked polyurethane hot melt adhesive layer 6b.

This at least one nonwoven fiber fleece formed component 5 is a thermoplastically bound, plane nonwoven fiber fleece formed component thermally compression-molded by a thermal molding process. This nonwoven fiber fleece formed component 5 was thermally compression-molded from a nonwoven glass fiber fleece composed of structure-forming glass fibers and having a specific weight of 350 g/m² to 500 g/m² and charged with a polyurethane amount of 350 g/m² to 500 g/m² as a binding agent. This nonwoven fiber fleece formed component 5 may have a rigidity of 6 N/mm to 8 N/mm expressed as a thickness-related elastic modulus. Alternatively, the nonwoven fiber fleece formed component may also be a plane nonwoven fiber fleece formed component 5 thermally compression-molded from a nonwoven fiber fleece composed of a mixture of structure-forming glass fibers and thermally deformable, matrix-forming polypropylene fibers (PP) as a binding agent and having a specific weight of 900 g/m² to 1200 g/m², which may also have a rigidity of 6 N/mm to 8 N/mm expressed as a thickness-related elastic modulus.

In a first simple embodiment of the invention, the at least one, thermoplastically bound, plane nonwoven fiber fleece formed component 5 already forms a plane nonwoven fiber fleece support structure 7 in its thermally compression-molded structure. In this constellation, the support structure 2 of a seat back of a vehicle seat or of a back seat of a motor vehicle then comprises the frame-shaped metal support structure 1 and the plane nonwoven fiber fleece support structure 7, wherein the frame-shaped metal support structure 1 is at least substantially composed of metal slats or metal profiles 3a to 3d, and thereon, on one side of the frame-shaped metal support structure 1, a thermoplastically bound, plane nonwoven fiber fleece formed component 5 is disposed, spanning the metal support structure 1 on this side, which is composed of structure-forming fibers, in particular glass fibers, and a matrix-forming binding agent, in particular polyurethane (PU) or thermoplastically deformable fibers, preferably polypropylene fibers, and forms the plane nonwoven fiber fleece support structure 7.

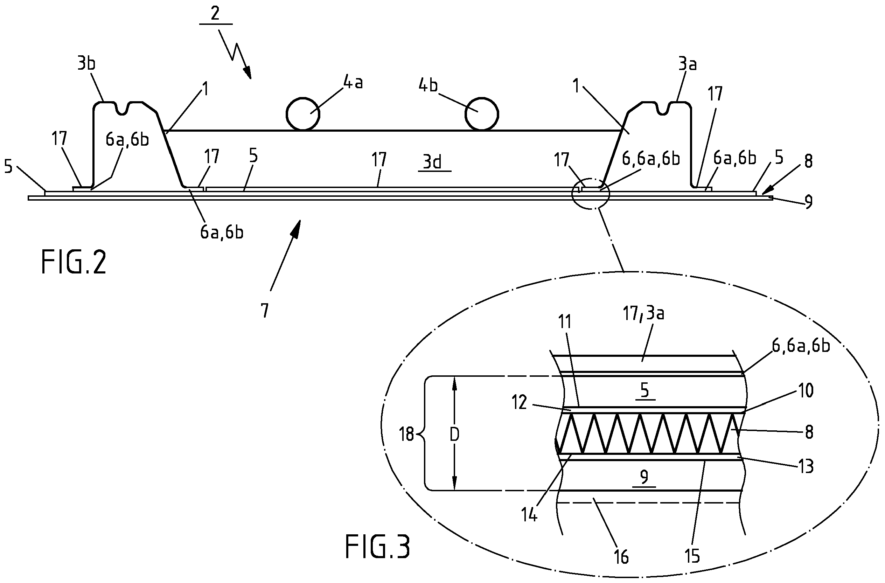

In the embodiment illustrated in Figures 1 and 2, the plane nonwoven fiber fleece support structure is, however, formed by a reinforced nonwoven fiber fleece support structure 7 forming a sandwich structure, which in addition to the at least one nonwoven fiber fleece formed component 5 comprises a honeycombed paper structure 8 and a second plane nonwoven fiber fleece formed component 9.

The honeycombed paper structure 8 has a specific paper weight of 140 g/m² to 160 g/m² and a cell width of the honeycombs of between 6 mm and 8 mm. The at least one, plane nonwoven fiber fleece formed component 5 is connected by material bonded engagement on a first outer side 10 of the honeycombed paper structure 8 by its lower side 11 to the honeycombed paper structure 8. This connection by material bonded engagement is established by means of a polyolefin film 12 which has a specific weight of 60 g/m² to 100 g/m² and which is laid and thermoplastically deformed between the first outer side 10 of the honeycombed paper structure 8 and the lower side 11 of the at least one plane nonwoven fiber fleece formed component 5 to be connected to the honeycombed paper structure 8 by material bonded engagement.

For further reinforcement of the nonwoven fiber fleece support structure 7, the honeycombed paper structure 8 is, according to the exemplary embodiment, also connected by material bonded engagement to the second nonwoven fiber fleece formed component 9 on the opposite side by means of another polyolefin film 13. In this respect, the thermoplastically bound, second plane nonwoven fiber fleece formed component 9 is fixed on a second outer side 14 of the honeycombed paper structure 8 opposite the first outer side 10 of the honeycombed paper structure 8. The polyolefin film 13 chosen for forming the connection by material bonded engagement also has a specific weight of 60 g/m² to 100 g/m² and is, in turn laid between the second outer side 14 of the honeycombed paper structure 8 and a lower side 15 of the second plane nonwoven fiber fleece formed component 9 to be connected by material bonded engagement to the honeycombed paper structure 8, and is thermoplastically deformed, thereby forming the connection by material bonded engagement.

Analogously to the first plane nonwoven fiber fleece formed component 5, the second plane nonwoven fiber fleece formed component 9 is also made by means of a thermal molding process of a nonwoven glass fiber fleece composed of structure-forming glass fibers and having a specific weight of 350 g/m² to 500 g/m² and charged with a polyurethane amount of 350 g/m² to 500 g/m² as a binding agent or of a nonwoven fiber fleece composed of a mixture of structure-forming glass fibers and thermally deformable, matrix-forming polypropylene fibers (PP) as a binding agent and having a specific weight of 900 g/m² to 1200 g/m². The nonwoven fiber fleece formed component 9 made of the glass fibers and polyurethane (PU) as a binding agent by thermal compression molding may have a rigidity of 6 N/mm to 8 N/mm expressed as a thickness-related elastic modulus. Similarly, the nonwoven fiber fleece thermally compression-molded from the mixture of polypropylene fibers (PP) and glass fibers may have a rigidity of 6 N/mm to 8 N/mm expressed as a thickness-related elastic modulus. Advantageously, only the sandwich construction 18 formed by the first and second nonwoven fiber fleece formed components 6, 9 and the honeycombed paper structure 8 has a rigidity of 6 N/mm to 8 N/mm expressed as a thickness-related elastic modulus.

Both the nonwoven fiber fleece support structure made of a single nonwoven fiber fleece formed component 5 and the plane nonwoven fiber fleece support structure 7 configured in a sandwiched way according to the embodiment respectively have a thickness D of 5 mm to 10 mm, in particular 6 mm to 9 mm. In this respect, the thickness of the nonwoven fiber fleece support structure 7 is measured in its final form, from the upper side of the nonwoven fiber fleece formed component 5 to be connected to the metal support structure 1 to the opposite outer side formed by an outer side of the second nonwoven fiber fleece formed component 9. If the nonwoven fiber fleece support structure 7 only comprises the at least one nonwoven fiber fleece formed component 5, this thickness D is measured between the two opposite outer sides of the nonwoven fiber fleece formed component 5. Any decoration or carpet pile layers 16, applied to the nonwoven fiber fleece formed component 5 or the second nonwoven fiber fleece formed component 9, as suggested in dots in Figure 2, are to be disregarded when determining the thickness.

According to another embodiment which is not shown, the respective nonwoven fiber fleece formed component 5, 9 may, in addition to the glass fiber layer provided with polyurethane or in addition to the layer constituted as a mixture of glass fibers and polypropylene fibers, may be provided with a pinned layer of a polyethylene terephthalate (PET) / polypropylene (PP) fiber mixture having a specific weight of 150 g/m² to 250 g/m², preferably 180 g/m² to 220 g/m². In this embodiment, the entirety of laid nonwoven glass fiber fleece with added polyurethane binding agent and pinned layer or the entirety of nonwoven glass fiber fleece with blended polypropylene fibers and pinned layer is thermally compression-molded to a or the nonwoven fiber fleece formed component(s) 5, 9. In this respect, preferably the surface of the at least one and/or of the second nonwoven fiber fleece formed component 5, 9 respectively opposed to the pinned layer is connected to the honeycombed paper structure 8 by material bonded engagement.

Altogether, the support structure 2 consisting of the frame-shaped metal structure 1 and the nonwoven fiber fleece support structure 7 has rigidity values of the frame-shaped metal structure 1 and nonwoven fiber fleece support structure 7 matched with each other in such a way, as well as such a strength value of the polyurethane hot melt adhesive bond 6, 6a, 6b connecting the frame-shaped metal support structure 1 and the nonwoven fiber fleece support structure 7 by material bonded engagement that the support structure 2 provided in such a way, installed in a seat back of a vehicle seat or a rear seat of a motor vehicle, resists the crash test loads of the motor vehicle occurring upon application of the DIN ISO standard 27955:2012.

As shown by Figure 1, the metal profiles 3a to 3d are profiled sheets comprising ridges 17 projecting laterally from their base. In the frame-shaped metal support structure 1 fully welded together from the metal profiles 3a to 3d, the outer sides of the ridges 17 are respectively on one level and therefore form a plane of a common outer side or outer surface onto which then the at least one nonwoven fiber fleece 5 of the plane nonwoven fiber fleece support structure 7 is adhered.

For manufacturing the support structure 2 according to the invention, the frame-shaped metal support structure 1 and the nonwoven fiber fleece support structure 7 are first separately manufactured in separate manufacturing steps and are then joined together in another manufacturing step to form the support structure 2 according to the invention. The frame-shaped metal support structure 1 is manufactured by welding together the metal slats or metal profiles 3a to 3d. The nonwoven fiber fleece support structure 7 is produced by carding, cross-lapping and pinning of a respectively desired or necessary fiber amount and mixture into a fiber glass nonwoven fiber fleece or nonwoven fiber fleece, where appropriate by admixing adhesive, and subsequent thermal compression-molding of the nonwoven glass fiber fleece or nonwoven fiber fleece to a nonwoven fiber fleece formed component 5, if this nonwoven fiber fleece formed component 5 already forms the nonwoven fiber fleece support structure 7. In the event that the nonwoven fiber fleece support structure 7 is made of a sandwiched structure with the sandwich construction 18, the nonwoven fiber fleeces manufactured as described are respectively laid onto respectively one side of a honeycombed paper structure 8, by interpositioning a polyolefin film 12, 13, and are then thermally compression-molded to form the nonwoven fiber fleece support structure 7 in a thermal compression-molding process. In a final manufacturing step, the frame-shaped metal support structure 1 is placed and the surface sides of the ridges 17 to be glued together with the nonwoven fiber fleece support structure 7 are provided with a polyurethane hot melt adhesive, and then, in a pressing process, the nonwoven fiber fleece support structure 7 comprising the at least one nonwoven fiber fleece formed component 5 and formed thereby or the nonwoven fiber fleece support structure 7 comprising the other, second nonwoven fiber fleece formed component 9 as well as the honeycombed paper structure 8 is laid onto the ridges 17 provided with adhesive and is, by application of pressure and temperature for cross-linking the polyurethane adhesive 6b, pressed together, thereby forming a connection 6 by material bonded engagement.

In this respect, the at least one thermoplastically bound, plane nonwoven fiber fleece formed component 5 is configured in a way to have a rigidity of 6 N/mm to 8 N/mm expressed as a thickness-related surface elastic modulus when forming the nonwoven fiber fleece support structure 7. In the event that the at least one plane nonwoven fiber fleece formed component 5 is only part of the plane nonwoven fiber fleece structure 7, at least the nonwoven fiber fleece support structure 7 constructed in a sandwich-like way (sandwich construction 18) altogether has the rigidity of 6 N/mm to 8 N/mm expressed as a thickness-related elastic modulus.

## Claims

1. Support structure (2) for a seat back of a vehicle seat or a rear seat of a motor vehicle, comprising a frame-shaped metal support structure (1) and a plane nonwoven fiber fleece support structure (7), wherein the frame-shaped metal support structure (1) is at least substantially composed of metal slats or metal profiles (3a, 3b, 3c, 3d) and comprises at least one thermoplastically bound, plane nonwoven fiber fleece formed component (5) disposed on a side of the frame-shaped metal support structure (1) and spanning the metal support structure (1) on this side, which is composed of structure-forming fibers, in particular glass fibers, and a matrix-forming binding agent, in particular polyurethane (PU) or thermoplastically deformable fibers, preferably polypropylene fibers, and forms the plane nonwoven fiber fleece support structure (7) or is part of the plane nonwoven fiber fleece support structure (7),
wherein the at least one thermoplastically bound, plane nonwoven fiber fleece formed component (5) is a plane nonwoven fiber fleece formed component (5) thermally compression-molded from a nonwoven fiber fleece, in particular a nonwoven glass fiber fleece, produced by carding, cross-lapping and pinning a fiber amount and mixture, which plane nonwoven fiber fleece formed component (5) forms the nonwoven fiber fleece support structure (7) or a part of the nonwoven fiber fleece support structure (7) and which is, in a way spanning the metal support structure (1), joined by material bonded engagement, in particular adhered, to respectively one outer side or outer surface of each of the metal slats or metal profiles (3a, 3b, 3c, 3d) spanning the frame-shaped metal support structure (1), wherein the nonwoven fiber fleece formed component (5) and/or the nonwoven fiber fleece support structure (7) comprising the nonwoven fiber fleece formed component (5), a second plane nonwoven fiber fleece formed component (9) and a honeycombed paper structure (8) has/have a rigidity of 6 N/mm to 8 N/mm expressed as a thickness-related elastic modulus.

2. Support structure (2) according to claim 1, **characterized in that** the at least one thermoplastically bound, plane nonwoven fiber fleece formed component (5) is either a plane nonwoven fiber fleece formed component (5) thermally compression-molded from a nonwoven glass fiber fleece composed of structure-forming glass fibers and having a specific weight of 350 g/m² to 500 g/m² and charged with a polyurethane amount of 350 g/m² to 500 g/m² as a binding agent, or a plane nonwoven fiber fleece formed component (5) thermally compression-molded from a nonwoven fiber fleece composed of a mixture of structure-forming glass fibers and thermally deformable, matrix-forming polypropylene fibers (PP) as a binding agent and having a specific weight of 900 g/m² to 1200 g/m².

3. Support structure according to claim 1 or 2, **characterized in that** the nonwoven fiber fleece formed component (5) has a rigidity of 6 N/mm to 8 N/mm expressed as a thickness-related elastic modulus, when forming the plane nonwoven fiber fleece support structure (7), or that the at least one nonwoven fiber fleece formed component (5) and/or the second nonwoven fiber fleece formed component (9) has/have a rigidity of 6 N/mm to 8 N/mm expressed as a thickness-related elastic modulus, when forming part of the plane nonwoven fiber fleece support structure (7), or that a sandwich construction (18) comprising the at least one nonwoven fiber fleece formed component (5) and the second nonwoven fiber fleece formed component (9) and the honeycombed paper structure (8) has a plane rigidity of 6 N/mm to 8 N/mm expressed as a thickness-related elastic modulus, when it forms part of the nonwoven fiber fleece support structure (7) or forms the same.

4. Support structure according to any one of the preceding claims, **characterized in that** the support structure (2) consisting of the frame-shaped metal support structure (1) and the nonwoven fiber fleece support structure (7) comprises rigidity values of the frame-shaped metal support structure (1) and the plane nonwoven fiber fleece support structure (7) matched with each other in such a way, as well as such a strength value of the polyurethane hot melt adhesive bond (6b) connecting the frame-shaped metal support structure (1) and the at least one nonwoven fiber fleece formed component (5) of the nonwoven fiber fleece support structure (7) by material bonded engagement, that the support structure (2) provided in such a way withstands the crash test loads of the vehicle upon application of the DIN ISO standard 27955:2012 when installed in a seat back of a vehicle seat or a back seat of a motor vehicle.

5. Support structure according to any one of claims 1 or 4, **characterized in that** it is manufactured using a method according to any one or more of claims 6 to 15.

6. Method for producing a support structure (2) of a seat back of a vehicle seat or a back seat of a motor vehicle, comprising a frame-shaped metal support structure (1) and a plane nonwoven fiber fleece support structure (7), wherein the frame-shaped metal support structure (1) is at least substantially composed of metal slats or metal profiles (3a, 3b, 3c, 3d) and comprises at least one thermoplastically bound, plane nonwoven fiber fleece formed component (5) disposed on one side of the frame-shaped metal support structure (1) and spanning the metal support structure (1) on this side, which is composed of structure-forming fibers, in particular glass fibers, and a matrix-forming binding agent, in particular polyurethane (PU) or thermoplastically deformable fibers, preferably polypropylene fibers, and which forms the plane nonwoven fiber fleece support structure (7) or is part of the plane nonwoven fiber fleece support structure (7),
wherein the frame-shaped metal support structure (1) is provided and laid,
and wherein a nonwoven fiber fleece, in particular a nonwoven glass fiber fleece, produced by carding, cross-lapping and pinning a fiber amount and mixture, is provided and thermally compression-molded to the at least one plane nonwoven fiber fleece formed component (5), wherein the nonwoven fiber fleece is compression-molded to the nonwoven fiber fleece formed component (5) forming the plane nonwoven fiber fleece support structure (7) or a part of the plane nonwoven fiber fleece support structure (7) comprising a second plane nonwoven fiber fleece formed component (9) and a honeycombed paper structure (8) in such a way that the obtained plane nonwoven fiber fleece formed component (5)and/or the obtained plane nonwoven fiber fleece support structure (7) comprising the nonwoven fiber fleece formed component (5), the second plane nonwoven fiber fleece formed component (9) and the honeycombed paper structure (8) has a rigidity of 6 N/mm to 8 N/mm expressed as a thickness-related elastic modulus,
and wherein the plane nonwoven fiber fleece formed component (5), thereby obtained and forming the nonwoven fiber fleece support structure (7) or forming a part of the nonwoven fiber fleece support structure (7), is connected by material bonded engagement, in particular adhered, in a way spanning the laid metal support structure (1) to respectively one outer side or outer surface of each of the metal slats or metal profiles (3a, 3b, 3c, 3d) which span the provided frame-shaped metal support structure (1).

7. Method according to claim 6, **characterized in that**, as a nonwoven fiber fleece, either a nonwoven glass fiber fleece composed of structure-forming glass-fibers having a specific weight of 350 g/m² to 500 g/m² is provided and charged with a polyurethane amount of 350 g/m² to 500 g/m² as a binding agent and is thermally compression-molded to the at least one plane nonwoven fiber fleece formed component (5), or that, as a nonwoven fiber fleece, a nonwoven fiber fleece composed of a mixture of structure-forming glass fibers and thermally deformable, matrix-forming polypropylene (PP) fibers as a binding agent having a specific weight of 900 g/m² to 1200 g/m² is provided and thermally compression-molded to the at least one plane nonwoven fiber fleece formed component (5).

8. Method according to claim 6 or 7, **characterized in that** the nonwoven glass fiber fleece or the nonwoven fiber fleece or the at least one plane nonwoven fiber fleece formed component (5) is fixed by material bonded engagement to a first outer side (10) of a honeycombed paper structure (8) before the connection by material bonded engagement, in particular adhesion, of the at least one plane nonwoven fiber fleece formed component (5) with the frame-shaped metal support structure (1) for forming a reinforced nonwoven fiber fleece support structure (7), wherein the honeycombed paper structure (8) has a specific paper weight of 140 g/m² to 160 g/m², and the honeycombs of which have a cell width of between 6 mm and 8 mm.

9. Method according to claim 8, **characterized in that** the nonwoven glass fiber fleece or the nonwoven fiber fleece or the at least one plane nonwoven fiber fleece formed component (5) is connected by material bonded engagement to the honeycombed paper structure (8) by means of a polyolefin film (12) which has a specific weight of 60 g/m² to 100 g/m² and which is laid and heated between the first outer side (10) of the honeycombed paper structure (8) and a lower side (11) of the nonwoven glass fiber fleece or the nonwoven fiber fleece or the at least one plane nonwoven fiber fleece formed component (5) to be connected by material bonded engagement to the honeycombed paper structure (8), and is then thermoplastically deformed by pressing together the honeycombed paper structure (8) and the nonwoven glass fiber fleece or nonwoven fiber fleece or plane nonwoven fiber fleece formed component (5).

10. Method according to claim 8 or 9, **characterized in that**, prior to the connection by material bonded engagement, in particular adhesion, of the at least one plane nonwoven fiber fleece formed component (5) with the metal support structure (1) for forming a further reinforced nonwoven fiber fleece support structure (7), a second nonwoven glass fiber fleece or a second nonwoven fiber fleece or a thermoplastically bound, second plane nonwoven fiber fleece formed component (9) is fixed by material bonded engagement to a second outer side (14) of the honeycombed paper structure (8) opposed to the first outer side (10) of the honeycombed paper structure (8).

11. Method according to claim 10, **characterized in that** the second nonwoven glass fiber fleece or the second nonwoven fiber fleece or the second plane nonwoven fiber fleece formed component (9) is connected by material bonded engagement to the honeycombed paper structure (8) by means of another polyolefin film (13) which has a specific weight of 60 g/m² to 100 g/m² and which is laid and heated between the second outer side (14) of the honeycombed paper structure (8) and a lower side (15) of the second nonwoven glass fiber fleece or the second nonwoven fiber fleece or the second plane nonwoven fiber fleece formed component (9) to be connected by material bonded engagement to the honeycombed paper structure (8) and is then thermoplastically deformed by pressing together the honeycombed paper structure (8) and the second nonwoven glass fiber fleece or the second nonwoven fiber fleece or the second plane nonwoven fiber fleece formed component (9).

12. Method according to claim 10 or 11, **characterized in that**, as a second nonwoven glass fiber fleece, a nonwoven glass fiber fleece composed of structure-forming glass fibers and having a specific weight of 350 g/m² to 500 g/m² and charged with a polyurethane amount of 350 g/m² to 500 g/m² as a binding agent is provided for fixing to or as a connection to the honeycombed paper structure (8), or that, as a second nonwoven fiber fleece, a nonwoven fiber fleece composed of a mixture of structure-forming glass fibers and thermally deformable, matrix-forming polypropylene fibers (PP) as a binding agent and having a specific weight of 900 g/m² to 1200 g/m² is provided for fixing to or as a connection to the honeycombed paper structure (8).

13. Method according to claim 10 or 11, **characterized in that** either a nonwoven glass fiber fleece composed of structure-forming glass fibers and having a specific weight of 350 g/m² to 500 g/m² and charged with a polyurethane amount of 350 g/m² to 500 g/m² as a binding agent is thermally compression-molded to the second plane nonwoven fiber fleece formed component (9) or that a nonwoven fiber fleece composed of a mixture of structure-forming glass fibers and thermally deformable, matrix-forming polypropylene fibers (PP) as a binding agent and having a specific weight of 900 g/m² to 1200 g/m² is thermally compression-molded to the second plane nonwoven fiber fleece formed component (9), and that the respective second plane nonwoven fiber fleece formed component (9) is provided for fixing to or connecting to the honeycombed paper structure (8), wherein the second plane nonwoven fiber fleece formed component (9) is preferably compression-molded in such a way that it has a rigidity of 6 N/mm to 8 N/mm expressed as a thickness-related elastic modulus.

14. Method according to any one of claims 6 to 13, **characterized in that** the nonwoven fiber fleece support structure (7) is configured and compression-molded in such a way that the at least one nonwoven fiber fleece formed component (5) has a rigidity of 6 N/mm to 8 N/mm expressed as a thickness-related elastic modulus, when it forms the nonwoven fiber fleece support structure (7), or that the at least one nonwoven fiber fleece formed component (5) and/or the second nonwoven fiber fleece formed component (9) has/have a rigidity of 6 N/mm to 8 N/mm expressed as a thickness-related elastic modulus, when they are part of the plane nonwoven fiber fleece support structure (7), or that a sandwich construction (18) comprising the at least one nonwoven fiber fleece formed component (5) and the second nonwoven fiber fleece formed component (9) and the honeycombed paper structure (8) has a rigidity of 6 N/mm to 8 N/mm expressed as a thickness-related elastic modulus, when it is part of the nonwoven fiber fleece support structure (7) or forms the same.

15. Method according to any one of claims 6 to 14, **characterized in that** the at least one and/or the second nonwoven fiber fleece formed component (5, 9) is thermally compression-molded from the, in particular laid, nonwoven glass fiber fleece with additionally pinned layer from a polyethylene terephthalate (PET) / polypropylene (PP) fiber mixture with a specific weight of 150 g/m² to 250 g/m², preferably 180 g/m² to 220 g/m², or the, in particular laid, fiber mixture comprising glass fibers and polypropylene fibers with additionally pinned layer from a polyethylene terephthalate (PET) / polypropylene (PP) fiber mixture with a specific weight of 150 g/m² to 250 g/m², preferably 180 g/m² to 220 g/m².

## Patentansprüche

1. Tragstruktur (2) für eine Rückenlehne eines Fahrzeugsitzes oder einer Rückbank eines Kraftfahrzeugs, die eine rahmenförmige Metalltragstruktur (1) und eine flächige Faservliestragstruktur (7) umfasst, wobei die rahmenförmige Metalltragstruktur (1) zumindest im Wesentlichen aus Metallleisten oder Metallprofilen (3a, 3b, 3c, 3d) aufgebaut ist und mindestens ein, auf einer Seite der rahmenförmigen Metalltragstruktur (1) angeordnetes und die Metalltragstruktur (1) auf dieser Seite überspannendes, thermoplastisch gebundenes, flächiges Faservliesformteil (5) aufweist, das aus strukturbildenden Fasern, insbesondere Glasfasern, und einem matrixbildenden Bindemittel, insbesondere Polyurethan (PU) oder thermoplastisch verformbaren Fasern, vorzugsweise Polypropylenfasern, aufgebaut ist und die flächige Faservliestragstruktur (7) ausbildet oder Bestandteil der flächigen Faservliestragstruktur (7) ist,
wobei das mindestens eine thermoplastisch gebundene, flächige Faservliesformteil (5) ein aus einem Faservlies, insbesondere einem Glasfaservlies, thermisch formgepresstes flächiges Faservliesformteil (5) ist, das durch Kardieren, Kreuzlegen und Vernadeln einer Fasermenge und -mischung erzeugt wird, wobei das flächige Faservliesformteil (5) die Faservliestragstruktur (7) oder einen Bestandteil der Faservliestragstruktur (7) ausbildet und das in einer die Metalltragstruktur (1) überspannenden Weise stoffschlüssig mit jeweils einer Außenseite oder Außenfläche jeder der Metallleisten oder Metallprofile (3a, 3b, 3c, 3d), die die rahmenförmige Metalltragstruktur (1) aufspannen, verbunden, insbesondere verklebt, ist, wobei das Faservliesformteil (5) und/oder die das Faservliesformteil (5), ein zweites flächiges Faservliesformteil (9) und eine wabenartige Papierstruktur (8) umfassende Faservliestragstruktur (7) eine als dickenbezogener Elastizitätsmodul ausgedrückte Steifigkeit von 6 N/mm bis 8 N/mm aufweist/aufweisen.

2. Tragstruktur (2) nach Anspruch 1, **dadurch gekennzeichnet, dass** das mindestens eine thermoplastisch gebundene, flächige Faservliesformteil (5) entweder ein aus einem aus strukturbildenden Glasfasern aufgebauten und ein spezifisches Gewicht von 350 g/m² - 500 g/m² aufweisenden sowie mit einer Polyurethanmenge von 350 g/m² - 500 g/m² als Bindemittel beaufschlagten Glasfaservlies thermisch formgepresstes flächiges Faservliesformteil (5) ist, oder ein aus einem Gemisch an strukturbildenden Glasfasern und thermisch verformbaren, matrixbildenden Polypropylenfasern (PP) als Bindemittel aufgebauten sowie ein spezifisches Gewicht von 900 g/m² - 1200 g/m² aufweisenden Faservlies thermisch formgepresstes flächiges Faservliesformteil (5) ist.

3. Tragstruktur nach Anspruch 1 oder 2, **dadurch gekennzeichnet, dass** das Faservliesformteil (5) eine als dickenbezogener Elastizitätsmodul ausgedrückte Steifigkeit von 6 N/mm bis 8 N/mm aufweist, wenn es die flächige Faservliestragstruktur (7) ausbildet, oder dass das mindestens eine Faservliesformteil (5) und/oder das zweite Faservliesformteil (9) eine als dickenbezogener Elastizitätsmodul ausgedrückte Steifigkeit von 6 N/mm bis 8 N/mm aufweist/aufweisen, wenn sie Bestandteil der flächigen Faservliestragstruktur (7) sind, oder dass eine das mindestens eine Faservliesformteil (5) und das zweite Faservliesformteil (9) und die wabenartige Papierstruktur (8) aufweisende Sandwichkonstruktion (18) eine als dickenbezogener Elastizitätsmodul ausgedrückte flächige Steifigkeit von 6 N/mm bis 8 N/mm aufweist, wenn sie Bestandteil der Faservliestragstruktur (7) ist oder diese ausbildet.

4. Tragstruktur nach irgendeinem der vorhergehenden Ansprüche, **dadurch gekennzeichnet, dass** die aus der rahmenförmigen Metalltragstruktur (1) und der Faservliestragstruktur (7) bestehende Tragstruktur (2) derart aufeinander abgestimmte Steifigkeitswerte der rahmenförmigen Metalltragstruktur (1) und der flächigen Faservliestragstruktur (7) sowie einen solchen Festigkeitswert der die rahmenförmige Metalltragstruktur (1) und das mindestens eine Faservliesformteil (5) der Faservliestragstruktur (7) stoffschlüssig verbindenden Polyurethan-Schmelzklebstoffverbindung (6b) aufweist, dass die derart bereitgestellte Tragstruktur (2), wenn sie in eine Rückenlehne eines Fahrzeugsitzes oder einer Rückbank eines Kraftfahrzeugs eingebaut ist, den bei Anwendung der Norm DIN ISO 27955:2012 auftretenden Crash-Test-Belastungen des Fahrzeugs standhält.

5. Tragstruktur nach irgendeinem der Ansprüche 1 oder 4, **dadurch gekennzeichnet, dass** sie mittels eines Verfahrens nach irgendeinem oder mehreren der Ansprüche 6 bis 15 hergestellt ist.

6. Verfahren zur Herstellung einer Tragstruktur (2) einer Rückenlehne eines Fahrzeugsitzes oder einer Rückbank eines Kraftfahrzeugs, die eine rahmenförmige Metalltragstruktur (1) und eine flächige Faservliestragstruktur (7) umfasst, wobei die rahmenförmige Metalltragstruktur (1) zumindest im Wesentlichen aus Metallleisten oder Metallprofilen (3a, 3b, 3c, 3d) aufgebaut ist und mindestens ein, auf einer Seite der rahmenförmigen Metalltragstruktur (1) angeordnetes und die Metalltragstruktur (1) auf dieser Seite überspannendes, thermoplastisch gebundenes, flächiges Faservliesformteil (5) aufweist, das aus strukturbildenden Fasern, insbesondere Glasfasern, und einem matrixbildenden Bindemittel, insbesondere Polyurethan (PU) oder thermoplastisch verformbaren Fasern, vorzugsweise Polypropylenfasern, aufgebaut ist und das die flächige Faservliestragstruktur (7) ausbildet oder Bestandteil der flächigen Faservliestragstruktur (7) ist,
wobei die rahmenförmige Metalltragstruktur (1) bereitgestellt und vorgelegt wird,
und wobei ein Faservlies, insbesondere ein Glasfaservlies, das durch Kardieren, Kreuzlegen und Vernadeln einer Fasermenge und -mischung erzeugt wird, bereitgestellt und thermisch zu dem mindestens einen flächigen Faservliesformteil (5) formgepresst wird, wobei das Faservlies derart zu dem die flächige Faservliestragstruktur (7) oder einen Bestandteil der flächigen Faservliestragstruktur (7), umfassend ein zweites flächiges Faservliesformteil (9) und eine wabenartige Papierstruktur (8), ausbildenden Faservliesformteil (5) formgepresst wird, dass das erhaltene flächige Faservliesformteil (5) und/oder die erhaltene flächige Faservliestragstruktur (7), umfassend das Faservliesformteil (5), das zweite flächige Faservliesformteil (9) und die wabenartige Papierstruktur (8), eine als dickenbezogener Elastizitätsmodul ausgedrückte Steifigkeit von 6 N/mm bis 8 N/mm aufweist,
und wobei das derart erhaltene und die Faservliestragstruktur (7) ausbildende oder einen Bestandteil der Faservliestragstruktur (7) ausbildende flächige Faservliesformteil (5) in einer die vorgelegte Metalltragstruktur (1) überspannenden Weise stoffschlüssig mit jeweils einer Außenseite oder Außenfläche jeder der Metallleisten oder Metallprofile (3a, 3b, 3c, 3d), die die bereitgestellte rahmenförmige Metalltragstruktur (1) aufspannen, verbunden, insbesondere verklebt wird.

7. Verfahren nach Anspruch 6, **dadurch gekennzeichnet, dass** als ein Faservlies entweder ein aus strukturbildenden Glasfasern aufgebautes Glasfaservlies mit einem spezifischen Gewicht von 350 g/m² bis 500 g/m² bereitgestellt und mit einer Polyurethanmenge von 350 g/m² bis 500 g/m² als Bindemittel beaufschlagt und thermisch zu dem mindestens einen flächigen Faservliesformteil (5) formgepresst wird, oder dass als Faservlies ein aus einem Gemisch an strukturbildenden Glasfasern und thermisch verformbaren, matrixbildenden Polypropylenfasern (PP) als Bindemittel aufgebautes Faservlies mit einem spezifischen Gewicht von 900 g/m² bis 1200 g/m² bereitgestellt und thermisch zu dem mindestens einen flächigen Faservliesformteil (5) formgepresst wird.

8. Verfahren nach Anspruch 6 oder 7, **dadurch gekennzeichnet, dass** das Glasfaservlies oder das Faservlies oder das mindestens eine flächige Faservliesformteil (5) vor der stoffschlüssigen Verbindung, insbesondere Verklebung, des mindestens einen flächigen Faservliesformteils (5) mit der rahmenförmigen Metalltragstruktur (1) zur Ausbildung einer verstärkten Faservliestragstruktur (7) stoffschlüssig auf einer ersten Außenseite (10) einer wabenartigen Papierstruktur (8) befestigt wird, wobei die wabenartige Papierstruktur (8) ein spezifisches Papiergewicht von 140 g/m² bis 160 g/m² aufweist und die Waben derselben eine Zellenweite von zwischen 6 mm und 8 mm haben.

9. Verfahren nach Anspruch 8, **dadurch gekennzeichnet, dass** das Glasfaservlies oder das Faservlies oder das mindestens eine flächige Faservliesformteil (5) mittels einer Polyolefinfolie (12), die ein spezifisches Gewicht von 60 g/m² bis 100 g/m² hat und die zwischen der ersten Außenseite (10) der wabenartigen Papierstruktur (8) und einer stoffschlüssig mit der wabenartigen Papierstruktur (8) zu verbindenden Unterseite (11) des Glasfaservlieses oder des Faservlieses oder des mindestens einen flächigen Faservliesformteils (5) gelegt und aufgeheizt und dann durch Aneinanderpressen der wabenartigen Papierstruktur (8) und des Glasfaservlieses oder Faservlieses oder flächigen Faservliesformteils (5) thermoplastisch verformt wird, stoffschlüssig mit der wabenartigen Papierstruktur (8) verbunden wird.

10. Verfahren nach Anspruch 8 oder 9, **dadurch gekennzeichnet, dass** vor der stoffschlüssigen Verbindung, insbesondere Verklebung, des mindestens einen flächigen Faservliesformteils (5) mit der Metalltragstruktur (1) zur Ausbildung einer weiter verstärkten Faservliestragstruktur (7) ein zweites Glasfaservlies oder ein zweites Faservlies oder ein thermoplastisch gebundenes, zweites flächiges Faservliesformteil (9) stoffschlüssig auf einer der ersten Außenseite (10) der wabenartigen Papierstruktur (8) gegenüberliegenden zweiten Außenseite (14) der wabenartigen Papierstruktur (8) befestigt wird.

11. Verfahren nach Anspruch 10, **dadurch gekennzeichnet, dass** das zweite Glasfaservlies oder das zweite Faservlies oder das zweite flächige Faservliesformteil (9) mittels einer weiteren Polyolefinfolie (13), die ein spezifisches Gewicht von 60 g/m² bis 100 g/m² hat und die zwischen der zweiten Außenseite (14) der wabenartigen Papierstruktur (8) und einer stoffschlüssig mit der wabenartigen Papierstruktur (8) zu verbindenden Unterseite (15) des zweiten Glasfaservlieses oder des zweiten Faservlieses oder des zweiten flächigen Faservliesformteils (9) gelegt und aufgeheizt wird und dann durch Aneinanderpressen der wabenartigen Papierstruktur (8) und des zweiten Glasfaservlieses oder des zweiten Faservlieses oder des zweiten flächigen Faservliesformteils (9) thermoplastisch verformt wird, stoffschlüssig mit der wabenartigen Papierstruktur (8) verbunden wird.

12. Verfahren nach Anspruch 10 oder 11, **dadurch gekennzeichnet, dass** als ein zweites Glasfaservlies ein aus strukturbildenden Glasfasern aufgebautes und ein spezifisches Gewicht von 350 g/m² bis 500 g/m² aufweisendes und mit einer Polyurethanmenge von 350 g/m² bis 500 g/m² als Bindemittel beaufschlagtes Glasfaservlies zur Befestigung an oder als Verbindung mit der wabenartigen Papierstruktur (8) bereitgestellt wird, oder dass als zweites Faservlies ein aus einem Gemisch an strukturbildenden Glasfasern und thermisch verformbaren, matrixbildenden Polypropylenfasern (PP) als Bindemittel aufgebautes und ein spezifisches Gewicht von 900 g/m² bis 1200 g/m² aufweisendes Faservlies zur Befestigung an oder als Verbindung mit der wabenartigen Papierstruktur (8) bereitgestellt wird.

13. Verfahren nach Anspruch 10 oder 11, **dadurch gekennzeichnet, dass** entweder ein aus strukturbildenden Glasfasern aufgebautes und ein spezifisches Gewicht von 350 g/m² bis 500 g/m² aufweisendes sowie mit einer Polyurethanmenge von 350 g/m² bis 500 g/m² als Bindemittel beaufschlagtes Glasfaservlies thermisch zu dem zweiten flächigen Faservliesformteil (9) formgepresst wird, oder dass ein aus einem Gemisch an strukturbildenden Glasfasern und thermisch verformbaren, matrixbildenden Polypropylenfasern (PP) als Bindemittel aufgebautes sowie ein spezifisches Gewicht von 900 g/m² bis 1200 g/m² aufweisendes Faservlies thermisch zu dem zweiten flächigen Faservliesformteil (9) formgepresst wird, und dass das jeweilige zweite flächige Faservliesformteil (9) zur Befestigung an oder Verbindung mit der wabenartigen Papierstruktur (8) bereitgestellt wird, wobei das zweite flächige Faservliesformteil (9) vorzugsweise derart formgepresst wird, dass es eine als einen dickenbezogenen Elastizitätsmodul ausgedrückte Steifigkeit von 6 N/mm bis 8 N/mm hat.

14. Verfahren nach irgendeinem der Ansprüche 6 bis 13, **dadurch gekennzeichnet, dass** die Faservliestragstruktur (7) derart konfiguriert und formgepresst wird, dass das mindestens eine Faservliesformteil (5) eine als einen dickenbezogenen Elastizitätsmodul ausgedrückte Steifigkeit von 6 N/mm bis 8 N/mm hat, wenn es die Faservliestragstruktur (7) ausbildet, oder dass das mindestens eine Faservliesformteil (5) und/oder das zweite Faservliesformteil (9) eine als einen dickenbezogenen Elastizitätsmodul ausgedrückte Steifigkeit von 6 N/mm bis 8 N/mm aufweist/aufweisen, wenn sie Bestandteil der flächigen Faservliestragstruktur (7) sind, oder dass eine das mindestens eine Faservliesformteil (5) und das zweite Faservliesformteil (9) und die wabenartige Papierstruktur (8) aufweisende Sandwichkonstruktion (18) eine als einen dickenbezogenen Elastizitätsmodul ausgedrückte Steifigkeit von 6 N/mm bis 8 N/mm aufweist, wenn sie Bestandteil der Faservliestragstruktur (7) ist oder diese ausbildet.

15. Verfahren nach irgendeinem der Ansprüche 6 bis 14, **dadurch gekennzeichnet, dass** das mindestens eine und/oder das zweite Faservliesformteil (5, 9) aus dem, insbesondere gelegten, Glasfaservlies mit zusätzlich aufgenadelter Lage aus einem Polyethylenterephthalat(PET)/Polypropylen(PP)-Fasergemisch mit einem spezifischen Gewicht von 150 g/m² bis 250 g/m², vorzugsweise 180 g/m² bis 220 g/m², oder dem, insbesondere gelegten, Glasfasern und Polypropylenfasern umfassenden Fasergemisch mit zusätzlich aufgenadelter Lage aus einem Polyethylenterephthalat(PET)/Polypropylen(PP)-Fasergemisch mit einem spezifischen Gewicht von 150 g/m² bis 250 g/m², vorzugsweise 180 g/m² bis 220 g/m², thermisch formgepresst wird.

## Revendications

1. Structure de support (2) pour un dossier d'un siège de véhicule ou d'un siège arrière de véhicule automobile, comprenant une structure de support métallique en forme de cadre (1) et une structure de support de non-tissé de fibres plane (7), dans laquelle la structure de support métallique en forme de cadre (1) est au moins essentiellement composée de lattes métalliques ou de profilés métalliques (3a, 3b, 3c, 3d) et comprend au moins un composant moulé en non-tissé de fibres plan (5) lié de manière thermoplastique, disposé sur un côté de la structure de support métallique en forme de cadre (1) et enjambant la structure de support métallique (1) sur ce côté, qui est composé de fibres formant structure, en particulier de fibres de verre, et d'un liant formant matrice, en particulier de polyuréthane (PU) ou de fibres déformables de manière thermoplastique, de préférence de fibres de polypropylène, et qui forme la structure de support de non-tissé de fibres plane (7) ou fait partie de la structure de support de non-tissé de fibres plane (7),
dans laquelle ledit au moins un composant moulé en non-tissé de fibres plan (5), lié de manière thermoplastique, est un composant moulé en non-tissé de fibres plan (5) moulé par compression thermique à partir d'un non-tissé de fibres, en particulier un non-tissé de fibres de verre, produit par cardage, chevauchement croisé et aiguilletage d'une quantité et d'un mélange de fibres, lequel composant moulé en non-tissé de fibres plan (5) forme la structure de support de non-tissé de fibres (7) ou une partie de la structure de support de non-tissé de fibres (7) et qui est, d'une manière enjambant la structure de support métallique (1), relié par un engagement par liaison de matière, en particulier adhéré, à respectivement un côté extérieur ou une surface extérieure de chacun des lattes métalliques ou profilés métalliques (3a, 3b, 3c, 3d) tendant la structure de support métallique en forme de cadre (1), où le composant moulé en non-tissé de fibres (5) et/ou la structure de support de non-tissé de fibres (7) comprenant le composant moulé en non-tissé de fibres (5), un deuxième composant moulé en non-tissé de fibres plan (9) et une structure de papier alvéolaire (8) a/ont une rigidité de 6 N/mm à 8 N/mm exprimée en tant que module élastique lié à l'épaisseur.

2. Structure de support (2) selon la revendication 1, **caractérisée en ce que** ledit au moins un composant moulé en non-tissé de fibres plan (5), lié de manière thermoplastique, est soit un composant moulé en non-tissé de fibres plan (5) moulé par compression thermique à partir d'un non-tissé de fibres de verre composé de fibres de verre formant structure et ayant un poids spécifique de 350 g/m² à 500 g/m² et chargé d'une quantité de polyuréthane de 350 g/m² à 500 g/m² en tant que liant, soit un composant moulé en non-tissé de fibres plan (5) moulé par compression thermique à partir d'un non-tissé de fibres composé d'un mélange de fibres de verre formant structure et de fibres de polypropylène (PP) formant matrice et thermiquement déformables, en tant que liant, et ayant un poids spécifique de 900 g/m² à 1200 g/m².

3. Structure de support selon la revendication 1 ou 2, **caractérisée en ce que** le composant moulé en non-tissé de fibres (5) a une rigidité de 6 N/mm à 8 N/mm exprimée en tant que module élastique lié à l'épaisseur, lors de la formation de la structure de support de non-tissé de fibres plane (7), ou **en ce que** ledit au moins un composant moulé en non-tissé de fibres (5) et/ou le deuxième composant moulé en non-tissé de fibres (9) a/ont une rigidité de 6 N/mm à 8 N/mm exprimée en tant que module élastique lié à l'épaisseur, lorsqu'ils font partie de la structure de support de non-tissé de fibres plane (7), ou qu'une construction en sandwich (18) comprenant ledit au moins un composant moulé en non-tissé de fibres (5) et le deuxième composant moulé en non-tissé de fibres (9) et la structure de papier alvéolaire (8) a une rigidité plane de 6 N/mm à 8 N/mm exprimée en tant que module élastique lié à l'épaisseur, lorsqu'elle fait partie de la structure de support de non-tissé de fibres (7) ou forme celle-ci.

4. Structure de support selon l'une quelconque des revendications précédentes, **caractérisée en ce que** la structure de support (2) constituée de la structure de support métallique en forme de cadre (1) et de la structure de support de non-tissé de fibres (7) comprend des valeurs de rigidité de la structure de support métallique en forme de cadre (1) et de la structure de support de non-tissé de fibres plane (7) adaptées les unes aux autres de telle manière, ainsi qu'une telle valeur de résistance de la liaison adhésive thermofusible en polyuréthane (6b) reliant la structure de support métallique en forme de cadre (1) et ledit au moins un composant moulé en non-tissé de fibres (5) de la structure de support de non-tissé de fibres (7) par engagement par liaison de matière, que la structure de support (2) fournie de cette manière résiste aux charges de l'essai de collision du véhicule lors de l'application de la norme DIN ISO 27955:2012 lorsqu'elle est installée dans un dossier d'un siège de véhicule ou dans un siège arrière d'un véhicule automobile.

5. Structure de support selon l'une quelconque des revendications 1 ou 4, **caractérisée en ce qu'**elle est fabriquée en utilisant un procédé selon l'une quelconque ou plusieurs des revendications 6 à 15.

6. Procédé de fabrication d'une structure de support (2) d'un dossier d'un siège de véhicule ou d'un siège arrière de véhicule automobile, comprenant une structure de support métallique en forme de cadre (1) et une structure de support de non-tissé de fibres plane (7), où la structure de support métallique en forme de cadre (1) est composée au moins essentiellement de lattes métalliques ou de profilés métalliques (3a, 3b, 3c, 3d) et comprend au moins un composant moulé en non-tissé de fibres plan (5), lié de manière thermoplastique, disposé sur un côté de la structure de support métallique en forme de cadre (1) et enjambant la structure de support métallique (1) sur ce côté, qui est composé de fibres formant structure, en particulier de fibres de verre, et d'un liant formant matrice, en particulier de polyuréthane (PU) ou de fibres déformables de manière thermoplastique, de préférence de fibres de polypropylène, et qui forme la structure de support de non-tissé de fibres plane (7) ou fait partie de la structure de support de non-tissé de fibres plane (7),
dans lequel la structure de support métallique en forme de cadre (1) est fournie et posée,
et dans lequel un non-tissé de fibres, en particulier un non-tissé de fibres de verre, produit par cardage, chevauchement croisé et aiguilletage d'une quantité et d'un mélange de fibres, est fourni et moulé par compression thermique sur ledit au moins un composant moulé en non-tissé de fibres plan (5), dans lequel le non-tissé de fibres est moulé par compression sur le composant moulé en non-tissé de fibres (5) formant la structure de support de non-tissé de fibres plane (7) ou une partie de la structure de support de non-tissé de fibres plane (7) comprenant un deuxième composant moulé en non-tissé de fibres plan (9) et une structure de papier alvéolaire (8) de telle sorte que le composant moulé en non-tissé de fibres plan (5) obtenu et/ou la structure de support de non-tissé de fibres plane (7) obtenue comprenant le composant moulé en non-tissé de fibres plan (5), le deuxième composant moulé en non-tissé de fibres plan (9) et la structure de papier alvéolaire (8) a une rigidité de 6 N/mm à 8 N/mm exprimée en tant que module élastique lié à l'épaisseur,
et dans lequel le composant moulé en non-tissé de fibres plan (5), ainsi obtenu et formant la structure de support de non-tissé de fibres plane (7) ou formant une partie de la structure de support de non-tissé de fibres plane (7), est relié par engagement de liaison de matière, en particulier adhéré, d'une manière enjambant la structure de support métallique (1) posée à respectivement un côté extérieur ou une surface extérieure de chacun des lattes métalliques ou profilés métalliques (3a, 3b, 3c, 3d) qui tendant la structure de support métallique en forme de cadre (1) fournie.

7. Procédé selon la revendication 6, **caractérisé en ce que**, en tant que non-tissé de fibres, soit un non-tissé de fibres de verre composé de fibres de verre formant structure ayant un poids spécifique de 350 g/m² à 500 g/m² est fourni et chargé d'une quantité de polyuréthane de 350 g/m² à 500 g/m² en tant que liant et est moulé par compression thermique sur ledit au moins un composant moulé en non-tissé de fibres plan (5), ou **en ce que**, en tant que non-tissé de fibres, un non-tissé de fibres composé d'un mélange de fibres de verre formant structure et de fibres de polypropylène (PP) formant matrice, thermiquement déformables, en tant que liant, ayant un poids spécifique de 900 g/m² à 1200 g/m², est fourni et moulé par compression thermique sur ledit au moins un composant moulé en non-tissé de fibres plan (5).

8. Procédé selon la revendication 6 ou 7, **caractérisé en ce que** le non-tissé de fibres de verre ou le non-tissé de fibres ou ledit au moins un composant moulé en non-tissé de fibres plan (5) est fixé par engagement par liaison de matière sur un premier côté extérieur (10) d'une structure de papier alvéolaire (8) avant la liaison par engagement par liaison de matière, en particulier adhésion, dudit au moins un composant moulé en non-tissé de fibres plan (5) avec la structure de support métallique en forme de cadre (1) pour former une structure de support de non-tissé de fibres plane renforcée (7), où la structure de papier alvéolaire (8) a un poids de papier spécifique de 140 g/m² à 160 g/m², et dont les alvéoles ont une largeur de cellule comprise entre 6 mm et 8 mm.

9. Procédé selon la revendication 8, **caractérisé en ce que** le non-tissé de fibres de verre ou le non-tissé de fibres ou ledit au moins un composant moulé en non-tissé de fibres plan (5) est lié par engagement par liaison de matière à la structure de papier alvéolaire (8) au moyen d'un film de polyoléfine (12) qui a un poids spécifique de 60 g/m² à 100 g/m² et qui est posé et chauffé entre la première face extérieure (10) de la structure de papier alvéolaire (8) et une face inférieure (11) du non-tissé de fibres de verre ou du non-tissé de fibres ou dudit au moins un composant moulé en non-tissé de fibres plan (5) à relier par engagement par liaison de matière à la structure de papier alvéolaire (8), et est ensuite déformé thermoplastiquement en pressant ensemble la structure de papier alvéolaire (8) et le non-tissé de fibres de verre ou le non-tissé de fibres ou le composant moulé en non-tissé de fibres plan (5).

10. Procédé selon la revendication 8 ou 9, **caractérisé en ce que**, avant la connexion par engagement par liaison de matière, en particulier l'adhésion, de l'au moins un composant moulé en non-tissé de fibres plan (5) avec la structure de support métallique (1) pour former une autre structure de support de non-tissé de fibres renforcée (7), un deuxième non-tissé de fibres de verre ou un deuxième non-tissé de fibres ou un deuxième composant moulé en non-tissé de fibres plan (9) lié de manière thermoplastique est fixé par engagement par liaison de matière sur un deuxième côté extérieur (14) de la structure de papier alvéolaire (8) opposé au premier côté extérieur (10) de la structure de papier alvéolaire (8).

11. Procédé selon la revendication 10, **caractérisé en ce que** le deuxième non-tissé de fibres de verre ou le deuxième non-tissé de fibres ou le deuxième composant moulé en non-tissé de fibres plan (9) est reliée à la structure de papier alvéolaire (8) par engagement par liaison de matière au moyen d'un autre film de polyoléfine (13) qui a un poids spécifique de 60 g/m² à 100 g/m² et qui est posé et chauffé entre le deuxième côté extérieur (14) de la structure de papier alvéolaire (8) et un côté inférieur (15) du deuxième non-tissé de fibres de verre ou du deuxième non-tissé de fibres non tissées ou du deuxième composant moulé en non-tissé de fibres plan (9) à relier par engagement par liaison de matière à la structure de papier alvéolaire (8) et est ensuite déformé thermoplastiquement en pressant ensemble la structure de papier alvéolaire (8) et le deuxième non-tissé de fibres de verre ou le deuxième non-tissé de fibres ou le deuxième composant moulé en non-tissé de fibres plan (9).

12. Procédé selon la revendication 10 ou 11, **caractérisé en ce que**, en tant que deuxième non-tissé de fibres de verre, un non-tissé de fibres de verre composé de fibres de verre formant structure et ayant un poids spécifique de 350 g/m² à 500 g/m² et chargé d'une quantité de polyuréthane de 350 g/m² à 500 g/m² en tant que liant est prévu pour la fixation à ou comme liaison avec la structure de papier alvéolaire (8), ou **en ce que**, en tant que deuxième non-tissé de fibres, un non-tissé de fibres composé d'un mélange de fibres de verre formant structure et de fibres de polypropylène (PP) formant matrice, thermiquement déformables, en tant que liant, et ayant un poids spécifique de 900 g/m² à 1200 g/m², est prévu pour la fixation à ou comme liaison avec la structure de papier alvéolaire (8).

13. Procédé selon la revendication 10 ou 11, **caractérisé en ce que** soit un non-tissé de fibres de verre composé de fibres de verre formant structure et ayant un poids spécifique de 350 g/m² à 500 g/m² et chargé d'une quantité de polyuréthane de 350 g/m² à 500 g/m² en tant que liant est moulé par compression thermique sur le deuxième composant moulé en non-tissé de fibres plan (9), soit un non-tissé de fibres composé d'un mélange de fibres de verre formant structure et de fibres de polypropylène (PP) formant matrice thermiquement déformables, en tant que liant, et ayant un poids spécifique de 900 g/m² à 1200 g/m², est moulé par compression thermique sur le deuxième composant moulé en non-tissé de fibres plan (9), et **en ce que** le deuxième composant moulé en non-tissé de fibres plan (9) respectif est prévu pour la fixation à ou comme liaison avec la structure de papier alvéolaire (8), où le deuxième composant moulé en non-tissé de fibres plan (9) est de préférence moulé par compression de telle manière qu'il présente une rigidité de 6 N/mm à 8 N/mm exprimée en tant que module élastique lié à l'épaisseur.

14. Procédé selon l'une quelconque des revendications 6 à 13, **caractérisé en ce que** la structure de support de non-tissé de fibres (7) est configurée et moulée par compression de telle sorte que ledit au moins un composant moulé en non-tissé de fibres (5) présente une rigidité de 6 N/mm à 8 N/mm exprimée en tant que module élastique lié à l'épaisseur, lorsqu'il forme la structure de support de non-tissé de fibres (7), ou que ledit au moins un composant moulé en non-tissé de fibres (5) et/ou le deuxième composant moulé en non-tissé de fibres (9) a/ont une rigidité de 6 N/mm à 8 N/mm exprimée en tant que module élastique lié à l'épaisseur, lorsqu'ils font partie de la structure de support de non-tissé de fibres plane (7), ou qu'une construction en sandwich (18) comprenant ledit au moins un composant moulé en non-tissé de fibres plan (5) et le deuxième composant moulé en non-tissé de fibres plan (9) et la structure de papier alvéolaire (8) a une rigidité de 6 N/mm à 8 N/mm exprimée en tant que module élastique lié à l'épaisseur, lorsqu'elle fait partie de la structure de support de non-tissé de fibres (7) ou forme celle-ci.

15. Procédé selon l'une quelconque des revendications 6 à 14, **caractérisé en ce que** l'au moins un et/ou le deuxième composant moulé en non-tissé de fibres (5, 9) est moulé par compression thermique à partir du non-tissé de fibres de verre, en particulier déposé, avec une couche supplémentaire épinglée d'un mélange de fibres de polyéthylène téréphtalate (PET) / polypropylène (PP) avec un poids spécifique de 150 g/m² à 250 g/m², de préférence de 180 g/m² à 220 g/m², ou du mélange de fibres, en particulier déposé, comprenant des fibres de verre et des fibres de polypropylène avec une couche supplémentaire épinglée d'un mélange de fibres de polyéthylène téréphtalate (PET) / polypropylène (PP) avec un poids spécifique de 150 g/m² à 250 g/m², de préférence de 180 g/m² à 220 g/m².
